(19) Europäisches Patentamt
European Patent Office
Office européen des brevets

(11) **EP 2 112 485 B1**

(12) **FASCICULE DE BREVET EUROPEEN**

(45) Date de publication et mention
de la délivrance du brevet:
**02.02.2011   Bulletin 2011/05**

(51) Int Cl.:
***G01J 9/02*** *(2006.01)*

(21) Numéro de dépôt: **09290234.5**

(22) Date de dépôt: **30.03.2009**

(54) **Procédé, réseau de phase et dispositif d'analyse de surface d'onde d'un faisceau de lumiére**

Verfahren, Phasengitter und Vorrichtung zur Analyse einer Lichtwellenfront

Method, phase grating and device for analysing the wavefront of a light beam

(84) Etats contractants désignés:
**DE FR GB**

(30) Priorité:  **22.04.2008   FR 0852688**

(43) Date de publication de la demande:
**28.10.2009   Bulletin 2009/44**

(73) Titulaire: **Office National d'Etudes et
de Recherches Aérospatiales
(O.N.E.R.A.)
92320 Châtillon-sous-Bagneux (FR)**

(72) Inventeurs:
• **Primot, Jérôme
92320 Chatillon (FR)**

• **Toulon, Bruno
89100 Saligny (FR)**
• **Guerineau, Nicolas
92160 Antony (FR)**
• **Velghe, Sabrina
91140 Villebon-sur-Yvette (FR)**
• **Haïdar, Riad
75011 Paris (FR)**

(74) Mandataire: **Novagraaf Technologies
122, rue Edouard Vaillant
92593 Levallois-Perret Cedex (FR)**

(56) Documents cités:
**EP-A- 1 061 349     FR-A- 2 897 426**

**Description**

L'invention se rapporte à un procédé, un réseau de phase et un dispositif destinés à l'analyse de la surface d'onde d'un faisceau de lumière pour le contrôle optique.

Ce type d'analyse est destiné au contrôle des éléments optiques, à la qualification des appareils optiques, ainsi qu'au pilotage des éléments optiques déformables utilisés dans les optiques actives ou adaptatives.

Il permet aussi l'étude de phénomènes physiques non directement mesurables, tels que les variations d'indice optique au sein de milieux turbulents que l'on peut rencontrer à la traversée de l'atmosphère terrestre, ou bien dans une veine de soufflerie. Il est aussi utilisé pour le contrôle de la planéité de composants électroniques, par exemple des plans focaux matriciels, ainsi que pour la mise en forme de faisceaux laser de puissance.

**ETAT DE LA TECHNIQUE**

Le type d'analyse selon l'invention repose en particulier sur l'interférométrie à décalage multilatéral, décrite par exemple dans les brevets d'inventions FR 2 682 761 et FR 2 712 978, et mise en oeuvre

Ce type d'analyse de surface d'onde est basé sur l'utilisation d'un réseau de diffraction bidimensionnel positionné sur le trajet du faisceau à analyser.

Un tel réseau est défini dans la suite de cet exposé comme étant un dispositif optique introduisant des variations périodiques de phase, d'intensité, ou de phase et d'intensité. Tout réseau est ainsi caractérisé par la multiplication de deux fonctions : l'une, appelée fonction de phase, traduisant les variations périodiques de phase introduites par un réseau de phase et l'autre, appelée fonction d'intensité, traduisant les variations périodiques d'intensité introduites par un réseau d'intensité.

Conformément au brevet FR 2 712 978 au nom du déposant, le mode de constitution et la définition d'un réseau bidimensionnel est rappelé ci-après. Un ensemble de points disposés régulièrement suivant deux directions constitue un maillage plan. Ces points définissent une maille élémentaire. La maille élémentaire est la plus petite surface permettant de réaliser un pavage non lacunaire du plan. Le polygone de la maille élémentaire est le polygone de surface minimale dont les côtés sont supportés par les médiatrices des segments reliant un point quelconque de l'ensemble à ses plus proches voisins. Un réseau bidimensionnel est la répétition à volonté d'un motif élémentaire disposé selon un maillage plan. Un maillage plan peut définir des mailles élémentaires hexagonales ou rectangulaires, les mailles carrées n'étant qu'un cas particulier de ces dernières.

Lorsqu'un réseau de diffraction est éclairé avec un faisceau de lumière, appelé faisceau incident, les faisceaux de lumière diffractés par le réseau, appelés faisceaux émergents, peuvent être décrits selon deux approches équivalentes.

La première approche consiste à considérer les faisceaux émergents comme des répliques du faisceau incident. Ils sont appelés sous-faisceaux, chacun correspondant à un ordre de diffraction du réseau.

La seconde approche consiste à considérer les faisceaux émergents comme des faisceaux transmis par chaque maille du réseau. Ils sont appelés faisceaux secondaires.

Dans les brevets FR 2 712 978 et FR 2 795 175 au nom du déposant, il est décrit en particulier des interféromètres à décalage trilatéral et quadrilatéral basé sur des réseaux de diffraction. Par un montage à base d'un réseau de diffraction, on subdivise optiquement le faisceau à analyser en trois (trilatéral) ou quatre (quadrilatéral) faisceaux émergents. Un traitement optique particulier des faisceaux émergents ainsi obtenus permet d'observer un interférogramme constitué d'un maillage de points lumineux qui est sensible aux gradients de la surface d'onde.

En particulier dans le brevet FR 2 712 978 déjà mentionné, l'interféromètre à décalage trilatéral décrit met en oeuvre un réseau bidimensionnel de phase et/ou d'intensité et un système de filtrage spatial. D'après l'approche par décomposition en sous-faisceaux, le réseau subdivise optiquement, dans un plan conjugué du défaut, le faisceau incident à analyser en trois sous-faisceaux. Un traitement optique particulier des trois sous-faisceaux ainsi obtenus permet d'observer un interférogramme constitué par un maillage hexagonal de taches lumineuses dont le contraste est invariant, quel que soit le plan d'observation retenu. Cet interférogramme est sensible aux gradients de la surface d'onde, et ce avec une possibilité d'ajustement continu de la dynamique et de la sensibilité.

La distance d'observation y est définie comme la distance séparant le plan d'observation retenu du plan dit de sensibilité nulle, ce dernier étant un plan conjugué du plan du réseau situé en aval du filtrage spatial. Dans l'article "Achromatic Three-Wave (or more) Lateral Shearing Interferometer" Journal of Optical Society of America A, volume 12, N°12, decembre 1995, le déposant a décrit une modification de cet interféromètre vers un interféromètre à décalage quadri-latéral pour lequel le maillage bidimensionnel des taches lumineuses observées dans l'interférogramme est rectangulaire et est donc mieux adapté pour les applications de pilotage d'optiques actives ou adaptatives.

Ce type d'analyseur est achromatique. En revanche, il est de mise en oeuvre complexe du fait de l'insertion du système de filtrage spatial pour sélectionner les sous-faisceaux entre le réseau et le plan d'observation du système de franges d'interférence. De plus, le système de filtrage spatial apporte des limitations pour la mesure de faisceaux lumineux fortement perturbés ou de très grande largeur spectrale.

Dans le brevet FR 2 795 175, le déposant a proposé une première évolution du système : ce brevet décrit un réseau bidimensionnel selon un maillage rectangulaire composé d'une fonction d'intensité, notée FI, qui définit un maillage rectangulaire de sous-pupilles, et d'une fonction de phase, notée FP, qui introduit un déphasage voisin de $\pi$ (modulo $2\pi$) entre deux faisceaux, appelés faisceaux secondaires, qui traversent deux sous-pupilles adjacentes.

La fonction d'intensité FI a une maille élémentaire rectangulaire de dimension « *L* » suivant une direction et « *l* » suivant l'autre ; la fonction de phase FP a une maille élémentaire de dimension *2L* suivant une direction et *2l* suivant l'autre direction. Sur ces mailles est disposé un motif élémentaire d'intensité ou de phase. Les côtés des mailles du réseau de phase et ceux des mailles du réseau d'intensité sont en coïncidence. Le réseau bidimensionnel est placé dans ou au voisinage d'un plan perpendiculaire au faisceau de lumière à analyser, ce qui provoque une diffraction du faisceau en différents faisceaux secondaires. On crée et on observe dans un plan, appelé plan d'analyse PA, une image formée par l'interférence des faisceaux émergents.

Ce type d'analyseur a donc les qualités de l'analyseur décrit dans le brevet FR 2 712 978, et offre de plus une compacité et une simplicité de mise en oeuvre accrue.

Dans le brevet FR 2 896 583, le déposant a proposé une variante du système précédent : ce brevet décrit un réseau bidimensionnel selon un maillage hexagonal composé d'une fonction d'intensité, notée FI, qui définit un maillage hexagonal de sous-pupilles, et d'une fonction de phase, notée FP, qui introduit un déphasage voisin de $2\pi/3$ (modulo $2\pi$) entre deux faisceaux secondaires, qui traversent deux sous-pupilles adjacentes.

Enfin, dans le brevet FR 2 897 426, le déposant a proposé une amélioration des techniques décrites dans les brevets mentionnés de manière à pouvoir mesurer des surfaces d'onde morcelées sans limitation sur l'amplitude des dénivelés entre morceaux. Une surface d'onde morcelée est définie comme une surface constituée par l'apposition discontinue de morceaux de surfaces, de tailles éventuellement différentes, avec éventuellement des lacunes entre les morceaux, et présentant des dénivelés entre les morceaux. La technique décrite utilise le traitement de deux interférogrammes réalisés à deux couleurs différentes, afin d'analyser la surface d'onde avec une grande dynamique de mesure.

De manière à réaliser un réseau bidimensionnel d'intensité et de phase, le déposant réalise une gravure et un dépôt métallique sur une même plaque, de manière à coder la fonction d'intensité FI et de phase FP sur le même substrat.

Pour réaliser ce type de réseau d'intensité et de phase, il existe un procédé de fabrication privilégié basé sur les techniques connues de photolithographie. Ces techniques, selon le type de motif à coder sont les suivantes :

- Technique de gravure d'un motif de phase (TP) : elle inclut le dépôt d'une couche de résine, son insolation puis son développement. La résine développée code le motif de phase en relief qui est ensuite transféré dans le substrat par un procédé de gravure sèche ;
- Technique de gravure d'un motif d'intensité (TI) : elle inclut le dépôt d'une couche de résine, son insolation puis son développement. La résine développée code le motif de phase en relief. Sur cette couche de résine développée, on dépose une couche métallique. L'ensemble est ensuite plongé dans une solution chimique qui a pour effet de dissoudre la résine et d'enlever les zones métallisées qui recouvraient la résine (procédé connu sous le nom de « lift-off »).

Or, pour réaliser un réseau d'intensité et de phase du type de celui décrit dans le brevet FR 2 795 175, les deux étapes (TP) et (TI) doivent être enchaînées avec un alignement rigoureux entre elles, ce qui est difficilement réalisable.

Pour répondre à ce problème, l'invention propose de simplifier le réseau afin qu'il soit réalisable en une seule étape (TP). De plus, l'invention permet la fabrication de copies de réseau en série à partir d'un composant maître, par moulage ou pressage, ce qui n'était pas possible avec les solutions de l'état de la technique.

La présente invention a donc pour but d'apporter un progrès essentiel en ce sens.

**RESUME de l'INVENTION**

Le procédé de l'invention est basé sur une fonction de phase résultant de la multiplication de deux fonctions de phase, une première fonction de phase qui code une zone d'exclusion, et une deuxième fonction fondamentale de déphasage.

Plus précisément, la présente invention a pour objet un procédé d'analyse de surface d'onde d'un faisceau de lumière, selon la revendication 1.

Selon le cas, PHI vaut $\pi$ en maillage rectangulaire (ou cartésien), ou bien $2k\pi/3$ (k valant 0, 1 ou 2) en maillage hexagonal.

Selon l'invention, la zone d'exclusion codée par la première fonction de phase transmet la portion du faisceau incident qui la traverse en un faisceau émergent parasite.

Cette zone d'exclusion introduit une variation dite rapide de la phase sur le faisceau émergent parasite. Par variation rapide, on entend une variation dont la dimension caractéristique d'évolution spatiale, selon au moins une direction du plan du réseau est comprise dans une fraction de la dimension de la maille selon cette direction, en particulier entre un vingtième et un tiers de cette dimension.

Cette variation rapide a pour effet de diffracter le faisceau émergent parasite dans des directions de propagation différentes de celles des pinceaux de lumière transmis par les sous pupilles. Ainsi, la zone d'exclusion codée par la première fonction de phase selon l'invention n'affecte sensiblement pas l'énergie diffractée par le réseau dans les pinceaux de lumière.

La deuxième fonction de phase introduit un déphasage entre deux pinceaux de lumière adapté en fonction de la nature du maillage, rectangulaire ou hexagonal, du type de celui introduit par la fonction de phase de l'art antérieur.

Le réseau de diffraction, réalisant la multiplication des deux fonctions ainsi définies, diffracte un maillage rectangulaire ou hexagonal de pinceaux de lumière qui se propagent et interfèrent entre eux. Il est ainsi généré, en tout plan d'observation parallèle au plan du réseau, une image se présentant sous la forme d'un maillage rectangulaire ou hexagonal de taches lumineuses dont la période est celle du maillage de la fonction d'exclusion et dont le contraste est sensiblement indépendant de la longueur d'onde ainsi que de la distance d'observation.

Le maillage de taches lumineuses est observable dans le plan du réseau, plan de sensibilité nulle. Le maillage est avantageusement observé dans un plan situé à une distance d'observation choisie par l'utilisateur en fonction des gradients de la surface d'onde à analyser et de la dynamique de phase désirée.

Ce procédé fonctionne en lumière polychromatique et, en ajustant la distance d'observation, permet - par un réglage continu de la sensibilité et de la dynamique de l'appareil - la mesure de faisceaux lumineux fortement perturbés.

De plus, ce procédé permet de mesurer des surfaces d'onde morcelées sans limitation sur l'amplitude des dénivelés entre morceaux, comme décrits dans la demande de brevet FR 2 897 426.

L'utilisateur dispose ainsi de la souplesse de réglage continu en dynamique de l'interféromètre à décalage multi-latéral à base de réseau de diffraction, avec un réseau de diffraction dont la fonction de transfert n'opère la multiplication que de deux fonctions de phase. L'utilisateur dispose également du mode de mesure à deux couleurs des surfaces d'onde morcelées.

Un avantage essentiel de l'invention est de permettre la réalisation de réseaux bidirectionnels en s'affranchissant de la délicate étape d'alignement du réseau d'intensité et du réseau de phase de l'art antérieur. Il est en effet alors possible de réaliser en une seule opération, selon la technique de gravure du motif de phase, le réseau comportant la zone d'exclusion et la zone utile selon l'invention.

L'invention a également pour objet un réseau de phase de mise en oeuvre du procédé ci-dessus selon la revendication 2.

Un réseau d'exclusion bidimensionnel de phase préférentiel pour coder la fonction d'exclusion a une maille élémentaire rectangulaire, de dimension L selon une première direction de maillage et l selon une autre direction, divisée en deux zones, une zone utile et une zone d'exclusion, la surface de zone utile voisine de 50% de la surface totale de la maille. La zone définissant la zone utile constitue une homothétie de la maille élémentaire du réseau d'exclusion, et la zone définissant la zone utile possède deux côtés en coïncidence avec deux côtés de la maille élémentaire du réseau d'exclusion.

Avantageusement, le réseau d'exclusion définit un maillage carré.

Dans un réseau d'exclusion de phase préférentiel, un damier à quatre cases peut être appliqué à la zone d'exclusion, chaque case du damier ayant pour longueur une fraction a de la longueur *L*, et pour largeur une fraction *b* de la largeur *l*. Le motif élémentaire de phase de la zone d'exclusion introduit un déphasage voisin de $\pi$ (modulo $2\pi$) entre deux faisceaux traversant deux cases du damier. De cette manière, le faisceau incident sur la zone d'exclusion est fortement dévié.

Un réseau bidimensionnel de phase fondamental préférentiel, réalisé dans un matériau ayant une certaine épaisseur et un indice de transmission, a un motif élémentaire de phase en damier à quatre cases, chaque case du damier ayant la longueur *L* et la largeur *l*, deux cases adjacentes présentant des épaisseurs différentes réalisant par variation d'indice la fonction de phase définie.

Les gravures ont lieu sur l'une des faces d'une lame d'une certaine épaisseur. Le réseau ainsi créé est utilisé en éclairant d'abord la face gravée. L'angle de réfraction sur cette face étant supérieur à l'angle limite arcsin(1/n) (n étant l'indice optique de la lame), le faisceau émergent parasite diffracté par la zone d'exclusion subit une réflexion totale sur la face opposée à la gravure du substrat. Ainsi le faisceau émergeant parasite n'atteint jamais le plan d'analyse et seuls les pinceaux de lumière peuvent se propager dans la direction du plan d'analyse et interférer.

Selon des modes de réalisation particuliers :

- le réseau d'exclusion a une zone d'exclusion où un motif invariant suivant une direction du réseau est appliqué, créant ainsi une structure géométrique constituée de rectangles, dont le plus grand côté correspond au côté L ou l de la maille et dont le petit côté correspond à une fraction, respectivement b ou a, de ce plus grand côté. Cette structure a une période constituant ainsi une fraction de la maille élémentaire du réseau de phase fondamentale, le motif élémentaire de phase de la zone d'exclusion introduisant par variation d'épaisseur un déphasage voisin de π modulo 2π entre deux faisceaux traversant deux bandes successives ;

- le réseau d'exclusion a une zone d'exclusion telle qu'elle diffuse le flux incident qui la traverse ;
- le réseau d'exclusion présente des zones d'exclusion de variations périodiques d'épaisseur « *e* » par palier ;
- le réseau de phase fondamental (GPF) est du type damier à niveaux différents présentant un écart d'épaisseur.

L'invention se rapporte aussi au dispositif d'analyse incorporant un tel réseau. Ce dispositif d'analyse est du type comprenant :

α) une optique d'entrée, conjuguant un plan de référence avec le plan dans lequel est analysée la surface d'onde,

β) un réseau bidimensionnel codé en phase défini ci-dessus, placé dans ce plan de référence perpendiculairement au faisceau pour provoquer une diffraction du faisceau en différents faisceaux émergents, et

γ) des moyens d'observation d'une image formée par l'interférence de faisceaux émergents, cette image présentant des déformations liées au gradient de la surface d'onde analysée.

Dans des modes de réalisation particuliers :

- le réseau de phase, gravé sur l'une des faces d'un substrat, crée des pinceaux de lumière par la traversée des mailles d'exclusion qui sont alors déviés en réflexion totale sur l'autre face du substrat ;
- le réseau de phase fonctionne en transmission ;
- le réseau de phase fonctionne en réflexion.

## BREVE DESCRIPTION DES DESSINS

D'autres caractéristiques et avantages de l'invention apparaîtront à l'examen de la description détaillée ci-après et des dessins annexés, qui représentent respectivement :

- la figure 1A, le schéma optique d'un exemple de dispositif selon l'invention pour le contrôle d'éléments optiques ;
- la figure 1B, le schéma optique d'un exemple de dispositif selon l'invention pour la mesure de milieux turbulents, en particulier l'atmosphère terrestre que traverse un faisceau issu d'une source polychromatique comme une étoile ;
- la figure 2, un exemple de réseau bidimensionnel à maillage rectangulaire d'un dispositif selon l'invention;
- la figure 3A, un exemple de géométrie de maille de réseau d'exclusion à maillage rectangulaire de dispositif selon l'invention;
- la figure 3B, un exemple de géométrie de maille d'un réseau d'exclusion à maillage carré de dispositif selon l'invention ;
- la figure 3C, en vue perspective partielle, un exemple de réseau d'exclusion à maillage rectangulaire de dispositif dans l'invention ;
- la figure 4, en vue perspective partielle, un exemple de réseau de phase fondamental à maillage rectangulaire d'un dispositif selon l'invention ; et
- la figure 5, en vue perspective, un exemple de réseau à maillage rectangulaire conforme à l'invention.

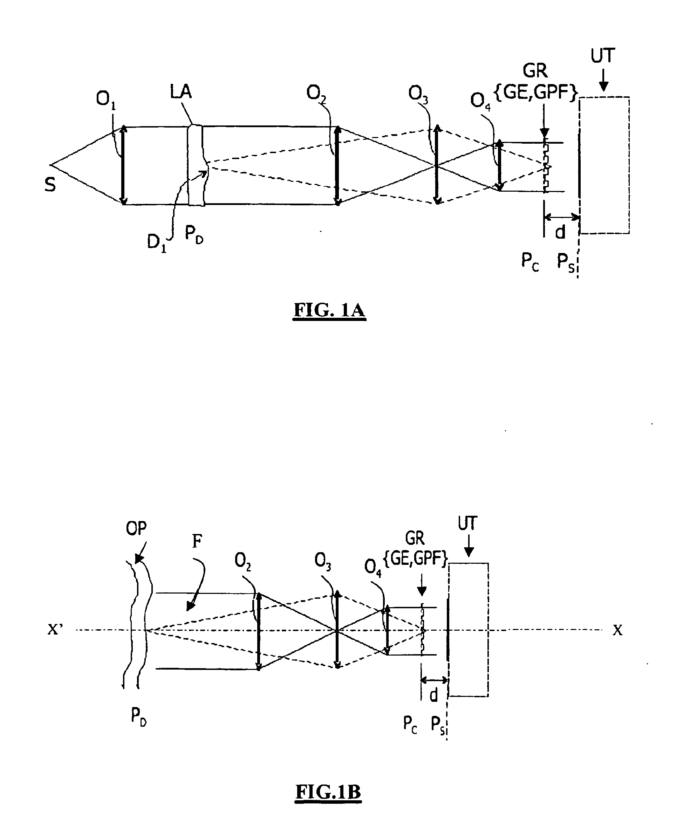

Les figures 1A et 1B présentent deux exemples de dispositifs permettant la mise en oeuvre de l'invention.
Sur la figure 1A, une source S de lumière polychromatique est placée au foyer d'une lentille collimatrice $O_1$. Le faisceau F de lumière parallèle issu de la lentille $O_1$ illumine un échantillon à tester, qui est représenté schématiquement comme une lame à faces parallèles LA, placé dans le plan $P_D$, et présentant un défaut de planéité $D_1$. L'échantillon peut être tout autre système optique (une lentille ou un miroir, en particulier un miroir de télescope), ou même simplement une zone d'un milieu gazeux qui serait perturbé, par exemple par un écoulement.
Dans le cas d'une application en astronomie, un dispositif permettant de mettre en oeuvre l'invention est illustré par la figure 1B. Une onde plane OP issue d'une source très éloignée comme une étoile par exemple traverse un milieu turbulent dont les variations d'indice sont représentées par des traits sinueux.
Un montage d'entrée réalise l'adaptation optique permettant de mettre en oeuvre le procédé selon l'invention.
Cette adaptation est réalisée de préférence par un système afocal d'axe X'X constitué de deux lentilles $O_2$ et $O_4$, avec en position intermédiaire une lentille de champ $O_3$. Ce système afocal a pour fonction d'une part, d'adapter le diamètre du faisceau, analysé dans le plan $P_D$, aux dimensions du réseau bidimensionnel situé dans un plan $P_C$, et, d'autre part, de conjuguer optiquement le plan $P_D$ où se situe le défaut à analyser avec le plan $P_C$.
D'autres moyens réalisant cette conjugaison optique entre ces deux plans peuvent convenir.

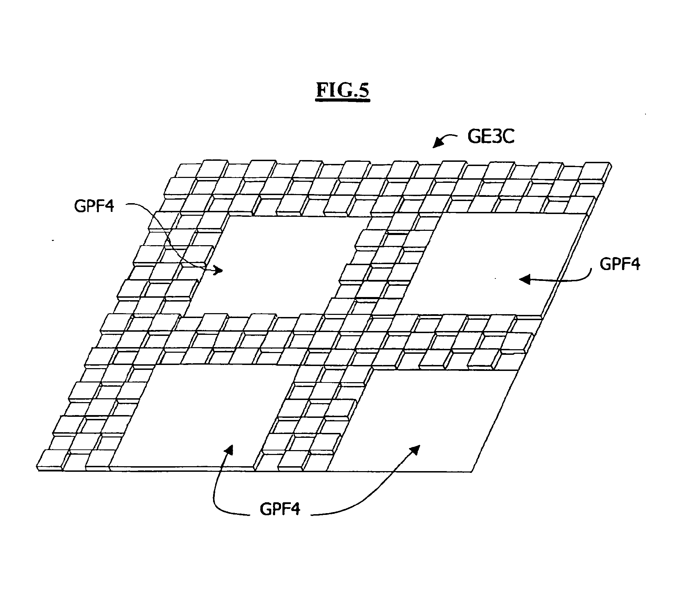

Dans le plan d'analyse P$_C$, on place (figure 1A ou 1B) un réseau bidimensionnel GR apte à réaliser la combinaison des fonctions de phase. Matériellement, ce réseau peut être constitué par mise en coïncidence de deux réseaux GE et GPF, comme par exemple ceux de la figure 5, ou plus de deux. C'est la combinaison particulière des fonctions qui caractérise le réseau de l'invention.

Dans l'exemple de réalisation présenté, le réseau est constitué d'un réseau de phase d'exclusion GE et d'un réseau de phase fondamental GPF.

Les deux fonctions de phase, fonction d'exclusion et fonction de phase fondamentale, sont également appelées ci-après sous-fonctions en tant que composantes d'une même fonction de phase.

Le réseau d'exclusion GE réalise une sous-fonction de phase d'exclusion dite FPE, qui définit un maillage rectangulaire de zone utile transmettant, sans introduire de variation spatiale de phase, la lumière du faisceau à analyser en plusieurs pinceaux de lumière.

Le réseau de phase fondamental GPF réalise une sous-fonction de phase fondamentale dite FPF qui introduit, entre deux pinceaux de lumière adjacents, un déphasage moyen voisin de π (modulo 2π).

L'ordre dans lequel sont réalisées ces deux fonctions dans le plan est sans importance.

Selon l'invention, l'interférogramme est constitué par un maillage rectangulaire de taches.

Le plan P$_C$ est un plan de sensibilité nulle.

L'observation est effectuée dans un plan P$_S$, situé à distance d'observation choisie « d » du plan P$_C$. Les moyens de traitement optique et d'observation de l'image formée par l'interférence des pinceaux de lumière sont désignés sous la référence UT.

La dynamique et la sensibilité du dispositif varient selon la distance d'observation. Ainsi, lorsque « d » est nulle, le plan d'observation est confondu avec le plan d'analyse P$_C$ où est situé le réseau et la sensibilité est nulle.

En général, un moyen complémentaire d'observation du plan P$_S$, constitué par exemple d'une lentille qui réalise une conjugaison optique entre le plan P$_S$ et un plan de travail plus accessible, peut être utilisé.

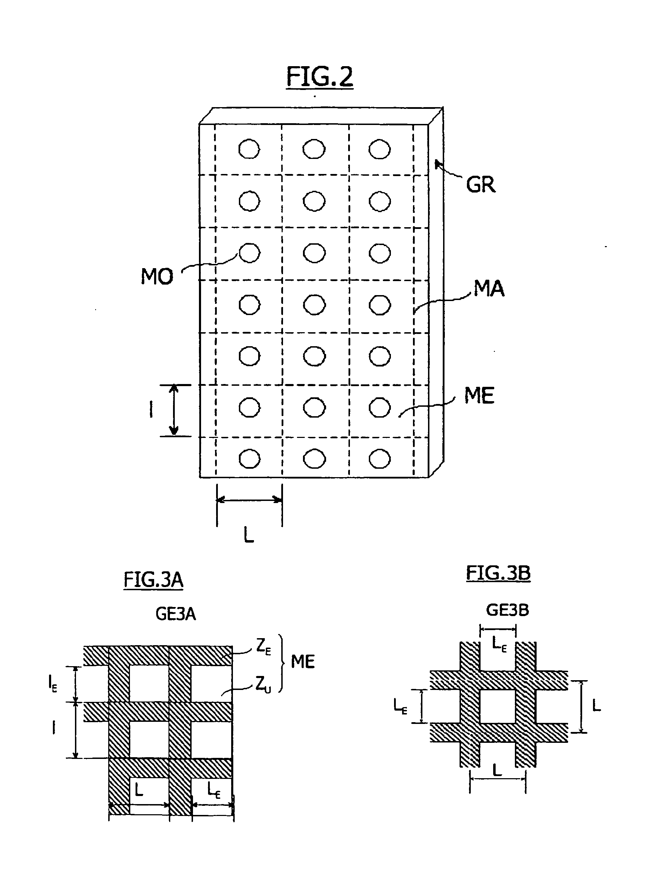

La figure 2 montre un réseau bidimensionnel G$_R$ à maillage rectangulaire caractérisé par une maille élémentaire rectangulaire longueur « *L* » et de largeur « *l* ». Des valeurs numériques de L et l sont typiquement comprises entre 50 et 200 μm. Le maillage MA, représenté en traits interrompus, n'est pas nécessairement visible dans le réseau final. Dans chaque maille ME, un motif MO est représenté qui introduit des variations d'intensité, de phase, ou d'intensité et de phase au faisceau lumineux incident.

Les figures 3A à 3C montrent des réseaux bidimensionnels d'exclusion qui offrent un moyen simple de réaliser la fonction d'exclusion selon le procédé d'invention. Les maillages comportent des zones grisées Z̲$_E$, correspondant aux zones d'exclusion, et des zones constituant les zones utiles Z̲$_U$ pouvant être soit transparentes soit réfléchissantes.

La figure 3A illustre un réseau GE3A à maillage rectangulaire de longueur *L* et de largeur *1.* Les zones claires constituent les zones utiles Z$_U$. De manière privilégiée, les côtés L$_E$ et l$_E$ de ces zones claires sont respectivement voisins de 2*L*/3 et 2*l*/3. Ainsi, la surface de la zone utile est proche de la moitié de la surface de la maille élémentaire M̲E̲.

La figure 3B illustre un réseau de phase d'exclusion GE3B du type à maille carrée de côté *L,* qui est le mode d'utilisation de l'invention le plus avantageux du fait que les traitements optiques de l'image formée sont facilités par le maillage carré des taches lumineuses.

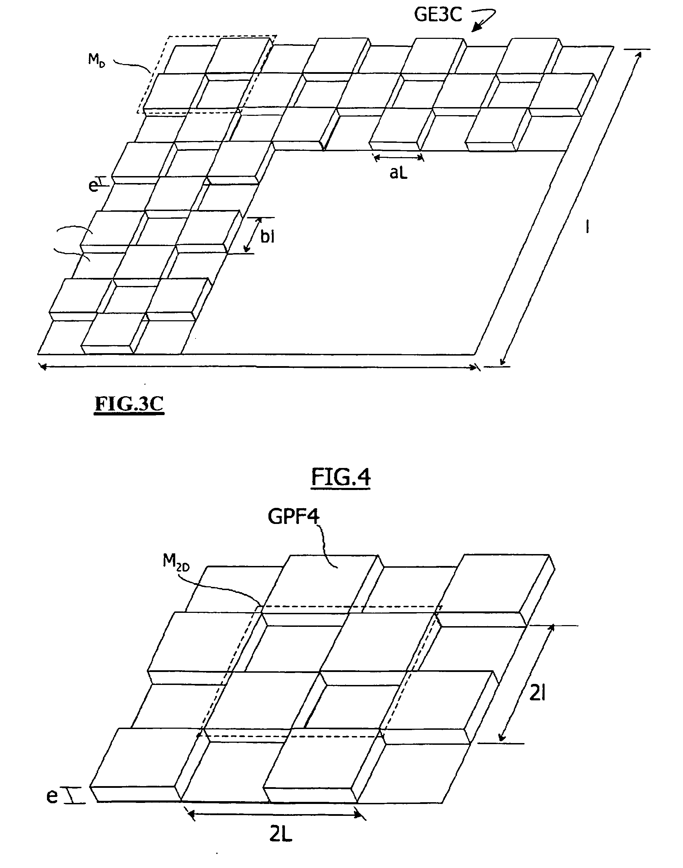

La figure 3C illustre, en vue partielle, un exemple de réseau d'exclusion GE3C à maillage rectangulaire représenté en perspective, qui offre un moyen simple de réaliser la fonction d'exclusion selon le procédé de l'invention. Cette figure illustre une zone d'exclusion Z$_E$ telle qu'elle présente un motif en damier M$_D$ (motif représenté par la zone en pointillé) à quatre cases.

Chaque case K̲c du damier a pour longueur une fraction « *a* » de la longueur *L* de la maille d'un réseau de phase fondamental GPF - du type GPF4 illustré en figure 4 , et pour largeur une fraction « *b* » de la largeur *l* de la maille du réseau de phase fondamental. Dans l'exemple illustré, cette fraction est égale à 1/9. L'intégration dans la zone utile du réseau de phase fondamental GPF4 dans le réseau d'exclusion GE3C est montré en figure 5.

Le réseau couvrant la zone d'exclusion présente des variations périodiques d'épaisseur « *e* » par palier, de manière à ce que l'écart d'épaisseur e entre paliers adjacents suive la relation :

$$e \; = \; \lambda/(n{-}1) \times (k{+}\tfrac{1}{2}),$$

dans laquelle :

- λ est la longueur d'onde moyenne d'utilisation,
- « *n* » est

    - l'indice de réfraction du matériau dans le cas d'une utilisation du réseau de phase en transmission, ou

- une constante valant 3 dans le cas d'une utilisation du réseau de phase en réflexion, et

- *k* un entier.

La figure 4 montre en perspective un exemple de réseau bidimensionnel de phase fondamental GPF, GPF4 dans l'exemple illustré, qui offre un moyen simple de réaliser la fonction de phase selon le procédé d'invention. Le réseau GPF4 est du type damier à maillage rectangulaire de motif $M_{2D}$ (motif limité par une ligne en traits pointillés sur la figure) de côtés 2*L* et 2*l*. Le réseau GPF4 présente des variations périodiques d'épaisseur par palier, de manière à ce que l'écart d'épaisseur « e » entre paliers adjacents suive une relation de même type que dans le maillage du réseau d'exclusion précédent :

$$ e = \lambda/(n-1) \times (k + \tfrac{1}{2}) $$

Les surfaces grisées du réseau GPF4 peuvent être soit transparentes, pour un réseau utilisé en transmission, soit réfléchissantes pour un réseau utilisé en réflexion.
Un moyen avantageux pour la réalisation des réseaux GE et GPF (références au regard des figures 1A et 1B) est d'utiliser la technique de gravure par photolithographie qui est largement employée dans l'industrie des semi-conducteurs. Les réseaux GE et GPF peuvent ainsi être réalisé par gravure d'une lame de substrat. Avec cette technique, il est possible de réaliser avec une seule lame de substrat un réseau bidimensionnel de phase qui combine les deux sous-fonctions FPE et FPF, respectivement des GE et GPF.
D'autres procédés de réalisation des deux fonctions FPE et FPF par des réseaux GE et GPF peuvent être envisagés basés, par exemple, sur le principe d'enregistrement sur des plaques photosensibles d'interférogrammes pour ainsi aboutir à la réalisation de réseaux holographiques. Un procédé à base de moulage ou de pressage peut être également envisagé pour répliquer de manière systématique et en une seule étape le réseau de phase bidimensionnel global.
La combinaison des réseaux GE et GPF permet de créer un réseau entièrement codé en phase qui, placé sur le trajet du faisceau de lumière à analyser, diffracte majoritairement quatre pinceaux de lumière, ainsi qu'un faisceau émergent parasite. Les pinceaux de lumière peuvent interférer sur le plan d'analyse de manière à générer en tout plan d'analyse parallèle au plan du réseau de diffraction, une image se présentant sous la forme d'un maillage rectangulaire de taches lumineuses.
Le faisceau émergent parasite peut être fortement dévié de manière à ce qu'il n'atteigne pas le plan d'analyse, pour peu que la distance entre le réseau de diffraction et le plan d'analyse soit suffisamment importante ; il peut également être dévié d'un angle calculé pour qu'une réflexion totale s'opère sur la face du substrat opposé à la gravure ; il peut également créer une surmodulation d'intensité à la figure d'intensité observée, surmodulation dont le pas peut être choisi de manière à être filtré par le pixel du plan d'analyse. Enfin, la zone d'exclusion peut diffuser les rayons lumineux et créer ainsi un fond uniforme se superposant à la figure d'interférence créée par les pinceaux de lumière.
La figure 5 illustre un exemple de réseau bidimensionnel GR apte à réaliser une fonction de phase en combinant les fonctions d'exclusion et de phase fondamentale, par mise en coïncidence du réseau d'exclusion GE3C (figure 3C) et du réseau de phase fondamental GPF4 (figure 4). Le réseau de phase fondamentale GPF4 est positionné dans des espaces libérés dans le maillage $M_D$ du réseau GE3C.

**Revendications**

1. Procédé d'analyse de surface d'onde d'un faisceau de lumière en contrôle optique, à partir :

   a) d'une fonction de phase introduite par un réseau bidimensionnel (GR) placé sensiblement dans un plan ($P_C$) perpendiculaire au faisceau de lumière à analyser et optiquement conjugué du plan ($P_D$) d'analyse de la surface d'onde, ce qui provoque une diffraction du faisceau en différents faisceaux émergents,
   b) d'une fonction d'intensité, et ;
   c) de déformations d'une image liées aux gradients de la surface d'onde analysée, cette image, formée par l'interférence de faisceaux émergents, étant créée et observée dans un plan ($P_S$) situé à distance choisie du plan du réseau ($P_C$), **caractérisé en ce que**, la fonction d'intensité étant uniforme sur la surface entière du réseau, l'étape a) comprend la multiplication :

      a1) d'une première fonction de phase, dite fonction d'exclusion FPE, qui définit un maillage de zones utiles

($Z_U$), n'introduisant pas de variations spatiales de phase dans la transmission ou la réflexion de la lumière du faisceau analysé, et de zones d'exclusion ($Z_E$) introduisant une première variation de phase <u>dont la dimension caractéristique d'évolution spatiale, selon au moins une direction du plan du réseau est comprise dans une fraction de la dimension de la maille selon cette direction</u>, et ;

a2) d'une deuxième fonction de phase FP, dite fonction de phase fondamentale, qui introduit entre <u>deux faisceaux émergents adjacents</u> un déphasage <u>dont la valeur est comprise dans l'ensemble $\{\pi[2\pi]$ ; $2k\pi /3[2\pi]\}_{k\varepsilon[0;1;2]}$</u> correspondant à un maillage choisi parmi des maillages rectangulaires et hexagonaux, <u>la période de la première fonction de phase constituant une fraction de la maille élémentaire de la deuxième fonction de phase</u>.

2.  Réseau de phase à maillage bidimensionnel (GR) de mise en oeuvre du procédé selon la revendication 1, **caractérisé en ce qu'**il est constitué par deux réseaux de mailles en coïncidence, dont :

    • un réseau de phase d'exclusion (GE) codant la fonction d'exclusion FPE et ayant une maille élémentaire constituée de deux zones, une première zone utile, où la phase de l'onde incidente n'est pas modifiée, et une deuxième zone d'exclusion, où est codée une <u>première variation de phase</u> dont la dimension caractéristique d'évolution spatiale, selon au moins une direction du plan du réseau est comprise dans une fraction de la dimension de la maille selon cette direction; et
    • un réseau de phase fondamental (GPF) codant la fonction de phase fondamentale FPF ayant une maille élémentaire où est disposé un motif élémentaire de phase, et **en ce que** le motif élémentaire de phase du réseau de phase fondamental (GPF) introduit un déphasage PHI correspondant au maillage entre deux pinceaux de lumière issus de deux mailles du réseau d'exclusion adjacentes.

3.  Réseau de phase selon la revendication 2, dans lequel le réseau d'exclusion (GE3A, GE3B, GE3C) a une maille élémentaire rectangulaire, de dimension L selon une première direction de maillage et l selon une autre direction, divisée en deux zones, une zone utile ($Z_U$) et une zone d'exclusion ($Z_E$) de surfaces sensiblement identiques, chaque zone utile ($Z_U$) constituant une homothétie de la maille élémentaire du réseau d'exclusion et possédant deux côtés en coïncidence avec deux côtés d'une zone d'exclusion ($Z_E$).

4.  Réseau de phase selon la revendication 3, dans lequel le réseau d'exclusion (GE3A, GE3B) définit un maillage de zones utiles ($Z_U$) dont la surface est proche de la moitié de la surface de la maille élémentaire (GPF4) du maillage du réseau d'exclusion.

5.  Réseau de phase selon la revendication 2 ou 3, dans lequel le réseau d'exclusion (GE3B) est de maillage carré.

6.  Réseau de phase selon la revendication 2 ou 3, dans lequel le réseau d'exclusion (GE3C) a une zone d'exclusion (Ze) avec un motif de damier à quatre cases (Ka), chaque case du damier ayant pour longueur une fraction (a) de la longueur L de la maille du réseau (GR) selon une direction et une fraction (b) de la largeur 1 de la maille du réseau (GR) selon l'autre direction, et en ce que le motif élémentaire de phase de la zone d'exclusion (Ze) introduit un déphasage voisin de $\pi$ modulo $2\pi$ entre deux faisceaux traversant deux cases du damier.

7.  Réseau de phase selon la revendication 2, dans lequel le réseau d'exclusion GE a une zone d'exclusion où un motif invariant suivant une direction du réseau est appliqué, créant ainsi une alternance de bandes dont la période constitue une fraction de la maille élémentaire du réseau de phase fondamentale (GPF4), et en ce que le motif élémentaire de phase de la zone d'exclusion introduit par variation d'épaisseur un déphasage voisin de $\pi$ modulo $2\pi$ entre deux faisceaux traversant deux bandes successives.

8.  Réseau de phase selon l'une quelconque des revendications 2 à 7, dans lequel le réseau d'exclusion GE a une zone d'exclusion telle qu'elle diffuse le flux incident qui la traverse.

9.  Réseau de phase selon l'une quelconque des revendications 2 à 8, dans lequel le réseau d'exclusion présente des zones d'exclusion (ZE) de variations périodiques d'épaisseur " e " par palier, de manière à ce que l'écart d'épaisseur

    e entre paliers adjacents suive une relation : $e = \lambda/(n-1) \times (k+\frac{1}{2})$, dans laquelle :

    $\lambda$ est la longueur d'onde moyenne d'utilisation, -" n " est :
    ○ l'indice de réfraction du matériau dans le cas d'une utilisation du réseau de phase en transmission, ou
    ○ une constante valant 3 dans le cas d'une utilisation du réseau de phase en réflexion, et

-k un entier.

**10.** Réseau de phase selon l'une quelconque des revendications 2 à 9, dans lequel le réseau de phase fondamental (GPF) est du type damier à niveaux différents présentant un écart d'épaisseur(e).

**11.** Réseau de phase selon la revendication précédente, dans lequel le réseau de phase fondamental (GPF4) présente des variations périodiques d'épaisseur par palier " e " entre paliers adjacents suivant une relation :

$$e=\lambda/(n-1)\times(k+\tfrac{1}{2}),$$

dans laquelle :

- $\lambda$ est la longueur d'onde moyenne d'utilisation,
- " n " est :

  ○ l'indice de réfraction du matériau dans le cas d'une utilisation du réseau de phase en transmission, ou
  ○ une constante valant 3 dans le cas d'une utilisation du réseau de phase en réflexion, et

- k un entier.

**12.** Réseau bidimensionnel de dispositif d'analyse selon l'une quelconque des revendications 2 à 11, **caractérisé en ce qu'**il est fabriqué à partir d'un composant maître par moulage ou pressage.

**13.** Dispositif d'analyse de surface d'onde d'un faisceau de lumière en contrôle optique, pour la mise en oeuvre du procédé selon la revendication 1, **caractérisé en ce qu'**il comprend :

  $\alpha$) une optique d'entrée ($O_2$, $O_3$, $O_4$), conjuguant optiquement un plan de référence (PC) avec le plan (PD) dans lequel est analysée la surface d'onde,
  $\beta$) un réseau bidimensionnel selon l'une quelconque des revendications 2 à 12, placé dans le plan de référence (PC) et provoquant une diffraction du faisceau en différents faisceaux émergents, et ;
  $\gamma$) des moyens d'observation de l'image formée par l'interférence des faisceaux émergents, image dont les déformations sont liées au gradient de la surface d'onde analysée.

**14.** Dispositif d'analyse selon la revendication 13, dans lequel le réseau de phase (GR), gravé sur l'une des faces d'un substrat, crée des pinceaux de lumière par la traversée des mailles d'exclusion qui sont alors déviés en réflexion totale sur l'autre face du substrat.

**15.** Dispositif d'analyse selon la revendication 14, dans lequel le réseau de phase (GR) fonctionne en transmission.

**16.** Dispositif d'analyse selon la revendication 14, dans lequel le réseau (GR) fonctionne en réflexion.

**Claims**

**1.** Method of analysis of the wave surface of a light beam during optical checking, with the help:

  a) of a phase function introduced by a two-dimensional grating (GR) placed substantially in a plane ($P_C$) perpendicular to the light beam to be analysed and optically conjugated with the plane ($P_D$) of analysis of the wave surface, thereby causing a diffraction of the beam into various emergent beams,
  b) of an intensity function, and
  c) of deformations of an image that are related to the gradients of the analysed wave surface, this image, formed by the interference of emergent beams, being created and observed in a plane ($P_S$) situated a chosen distance from the plane of the grating ($P_C$), **characterized in that**, the intensity function being uniform over the entire surface of the grating, step a) comprises the multiplication:

  a1) of a first phase function, termed the exclusion function FPE, which defines a mesh of useful zones ($Z_U$),

not introducing any spatial variations of phase in the transmission or the reflection of the light of the analysed beam, and of exclusion zones ($Z_E$) introducing a first phase variation whose characteristic dimension of spatial evolution, in at least one direction of the plane of the grating, is contained within a fraction of the dimension of the mesh cell in this direction, and

a2) of a second phase function FP, termed the fundamental phase function, which introduces between two adjacent emergent beams a phase shift whose value is contained within the set $\{\pi[2\pi]; 2k\pi/3[2\pi]\}_{k\varepsilon\{0;1;2\}}$ corresponding to a mesh chosen from among rectangular and hexagonal meshes, the period of the first phase function constituting a fraction of the elementary mesh cell of the second phase function.

2. Phase grating with two-dimensional mesh (GR) for implementing the method according to Claim 1, **characterized in that** it consists of two gratings of mesh cells in coincidence, namely:

- an exclusion phase grating (GE) coding the exclusion function FPE and having an elementary mesh cell consisting of two zones, a first useful zone, where the phase of the incident wave is not modified, and a second exclusion zone, where a first phase variation is coded whose characteristic dimension of spatial evolution, in at least one direction of the plane of the grating, is contained within a fraction of the dimension of the mesh cell in this direction; and
- a fundamental phase grating (GPF) coding the fundamental phase function FPF having an elementary mesh cell where an elementary phase pattern is disposed, and **in that** the elementary phase pattern of the fundamental phase grating (GPF) introduces a phase shift PHI corresponding to the mesh between two light pencils arising from two adjacent mesh cells of the exclusion grating.

3. Phase grating according to Claim 2, in which the exclusion grating (GE3A, GE3B, GE3C) has a rectangular elementary mesh cell, of dimension L in a first mesh direction and I in another direction, divided into two zones, a useful zone ($Z_U$) and an exclusion zone ($Z_E$) of substantially identical areas, each useful zone ($Z_U$) constituting a homothety of the elementary mesh cell of the exclusion grating and possessing two sides in coincidence with two sides of an exclusion zone ($Z_E$).

4. Phase grating according to Claim 3, in which the exclusion grating (GE3A, GE3B) defines a mesh of useful zones ($Z_U$) whose area is close to half the area of the elementary mesh cell (GPF4) of the mesh of the exclusion grating.

5. Phase grating according to Claim 2 or 3, in which the exclusion grating (GE3B) is of square mesh.

6. Phase grating according to Claim 2 or 3, in which the exclusion grating (GE3C) has an exclusion zone (Ze) with a checkerboard pattern with four squares (Ka), each square of the checkerboard having as length a fraction (a) of the length L of the mesh cell of the grating (GR) in one direction and a fraction (b) of the width 1 of the mesh cell of the grating (GR) in the other direction, and in that the elementary phase pattern of the exclusion zone (Ze) introduces a phase shift of about $\pi$ modulo $2\pi$ between two beams passing through two squares of the checkerboard.

7. Phase grating according to Claim 2, in which the exclusion grating GE has an exclusion zone where an invariant pattern along a direction of the grating is applied, thus creating an alternation of bands whose period constitutes a fraction of the elementary mesh cell of the fundamental phase grating (GPF4), and in that the elementary phase pattern of the exclusion zone introduces by thickness variation a phase shift of about $\pi$ modulo $2\pi$ between two beams passing through two successive bands.

8. Phase grating according to any one of Claims 2 to 7, in which the exclusion grating GE has an exclusion zone such that it diffuses the incident flux which passes through it.

9. Phase grating according to any one of Claims 2 to 8, in which the exclusion grating exhibits exclusion zones ($Z_E$) of periodic variations of thickness "e" by stages, in such a way that the discrepancy in thickness e between adjacent stages follows a relation:

$$e=\lambda/(n-1)\times(k+1/2),$$

in which:

- λ is the mean wavelength of use,
- "n" is

• the refractive index of the material in the case where the phase grating is used in transmission, or
• a constant equal to 3 in the case where the phase grating is used in reflection, and

- k is an integer.

10. Phase grating according to any one of Claims 2 to 9, in which the fundamental phase grating (GPF) is of the checkerboard type with different levels exhibiting a discrepancy in thickness (e).

11. Phase grating according to the preceding claim, in which the fundamental phase grating (GPF4) exhibits periodic variations of thickness by stages "e" between adjacent stages in accordance with a relation:

$$e=\lambda/(n-1)\,x\,(k+1/2),$$

in which:

- λ is the mean wavelength of use,
- "n" is

• the refractive index of the material in the case where the phase grating is used in transmission, or
• a constant equal to 3 in the case where the phase grating is used in reflection, and

- k is an integer.

12. Two-dimensional grating of analysis device according to any one of Claims 2 to 11, **characterized in that** it is fabricated from a master component by moulding or pressing.

13. Device for the analysis of the wave surface of a light beam during optical checking, for the implementation of the method according to Claim 1, **characterized in that** it comprises:

α) an input optic ($O_2$, $O_3$, $O_4$), optically conjugating a reference plane (PC) with the plane (PD) in which the wave surface is analysed,
β) a two-dimensional grating according to any one of Claims 2 to 12, placed in the reference plane (PC) and causing a diffraction of the beam into various emergent beams, and
γ) means for observing the image formed by the interference of the emergent beams, the deformations of which image are related to the gradient of the analysed wave surface.

14. Analysis device according to Claim 13, in which the phase grating (GR), etched on one of the faces of a substrate, creates light pencils by passing through the exclusion mesh cells which are then deviated in total reflection on the other face of the substrate.

15. Analysis device according to Claim 14, in which the phase grating (GR) operates in transmission.

16. Analysis device according to Claim 14, in which the grating (GR) operates in reflection.

**Patentansprüche**

1. Verfahren zur Analyse einer Lichtwellenfront im Rahmen einer optischen Kontrolle, mit:

a) einer Phasenfunktion, die durch ein zweidimensionales Gitter (GR) eingebracht wird, welches im Wesentlichen in einer Ebene ($P_C$) senkrecht zum analysierenden Lichtstrahl angeordnet und optisch der Analyseebene ($P_D$) der Wellenfront zugeordnet ist, was eine Diffraktion des Strahls in unterschiedliche Strahlenaustritte hervorruft,

b) einer Intensitätsfunktion, und;

c) Deformationen eines Bildes, die mit den Gradienten der analysierten Wellenfront verbunden sind, wobei dieses Bild, das unter Interferenz der Strahlenaustritte gebildet wird, in einer Ebene ($P_S$) erzeugt und beobachtet wird, die in einem gewählten Abstand von der Gitterebene ($P_C$) liegt, **dadurch gekennzeichnet, dass**, wenn die Intensitätsfunktion über die gesamte Oberfläche des Gitters gleichförmig ist, der Schritt a) die Multiplikation umfasst:

a1) einer ersten Phasenfunktion, genannt Ausschlussfunktion FPE, welche definiert ein Maschennetz von Wirkungsgebieten ($Z_U$), die keine räumlichen Variationen der Phase in die Transmission oder die Reflektion des Lichtes des analysierten Strahls einbringen, und Ausschlussgebiete ($Z_E$), welche eine erste Phasenvariation einbringen, deren charakteristische räumliche Entwicklungsdimension in wenigstens einer Richtung der Gitterebene in einer Fraktion der Dimension des Maschennetzes in dieser Richtung enthalten ist, und;

a2) einer zweiten Phasenfunktion FP, genannt die Grundphasenfunktion, welche zwischen zwei benachbarten Strahlenaustritten eine Phasenverschiebung einbringt, deren Wert in der Gesamtheit $\{\pi[2\pi]; 2 k\pi / 3[2\pi]\}_{k\varepsilon[0;1;2]}$ einem Maschenwerk entspricht, das ausgewählt ist aus rechtwinkligen und sechseckigen Maschen, wobei die Periode der ersten Phasenfunktion eine Fraktion der Elementarmasche der zweiten Phasenfunktion bildet.

2. Phasengitter mit einem zweidimensionalen Maschennetz (GR) zur Durchführung des Verfahrens nach Anspruch 1, **dadurch gekennzeichnet, dass** dieses durch zwei Gitter mit zusammenfallenden Maschen gebildet ist, von denen:

• ein Ausschluss-Phasengitter (GE) die Ausschlussfunktion FPE kodiert und eine Elementarmasche hat, das gebildet wird aus zwei Gebieten, ein erstes Wirkungsgebiet, in welchem die Phase der einfallenden Welle nicht modifiziert wird, und eine zweites Ausschlussgebiet, in welchem eine erste Phasenvariation kodiert wird, deren charakteristische räumliche Entwicklungsdimension in wenigstens einer Richtung der Gitterebene in einer Fraktion der Dimension der Masche in dieser Richtung enthalten ist;

• ein Grundphasengitter (GPF) die die Grundphasenfunktion FPF kodiert und eine Elementarmasche hat, in welcher ein Phasen-Elementarmotiv angeordnet ist, und dass das Phasen-Elementarmotiv des Grundphasengitters (GPF) eine Phasenverschiebung PHI einbringt, welche mit dem Maschennetz zwischen zwei Lichtspitzen korrespondiert, die von zwei benachbarten Maschennetzen des Ausschlussgitters erzeugt werden.

3. Gitternetz nach Anspruch 2, in welchem das Ausschlussgitter (GE3A, GE3B, GE3C) eine rechtwinklige Elementarmasche hat, mit der Dimension L in einer ersten Richtung des Maschennetzes und l in einer weiteren Richtung, geteilt in zwei Gebiete, einem Wirkungsgebiet ($Z_U$) und einem Ausschlussgebiet ($Z_E$) mit im Wesentlichen identischen Oberflächen, wobei jedes Wirkungsgebiet ($Z_U$) eine Homothetie der Elementarmasche des Ausschlussgitters bildet und zwei Seiten besitzt, die mit zwei Seiten eines Ausschlussgebietes ($Z_E$) zusammenfallen.

4. Phasengitter nach Anspruch 3, in welchem das Ausschlussgitter (GE3A, GE3B) ein Maschennetz von Wirkungsgebieten ($Z_U$) definiert, deren Oberfläche nahe der Hälfte der Oberfläche der Elementarmasche (GPF4) des Maschennetzes des Ausschlussgitters liegt.

5. Phasengitter nach Anspruch 2 oder 3, in welchem das Ausschlussgitter (GE3B) ein quadratisches Maschennetz ist.

6. Phasengitter nach Anspruch 2 oder 3, in welchem das Ausschlussgitter (GE3C) ein Ausschlussgebiet (Ze) mit einem Schachbrettmotiv mit vier Kästchen (Ka) hat, wobei jedes Kästchen des Schachbretts als Länge eine Fraktion (a) der Länge L der Masche des Gitters (GR) in einer Richtung und eine Fraktion (b) der Länge l der Masche des Gitters (GR) in der anderen Richtung hat, und dass das Phasen-Elementarmotiv der Ausschlusszone (Ze) eine Phasenverschiebung von $\pi$-Modul $2\pi$ zwischen zwei Strahlen einbringt, welche zwei Kästchen des Schachbretts durchqueren.

7. Phasengitter nach Anspruch 2, in welchem das Ausschlussgitter GE ein Ausschlussgebiet hat, in welchem ein invariantes Motiv in einer Richtung des Gitters angelegt ist, das somit eine Änderung der Bänder erzeugt, deren Periode eine Fraktion der Elementarmasche des Grundphasengitters (GPF4) bildet, und dass das Phasen-Elementarmotiv des Ausschlussgebietes durch Variation der Dicke, eine Phaseverschiebung nahe des $\pi$-Moduls $2\pi$ zwischen zwei Strahlen einbringt, welche zwei aufeinanderfolgende Bänder durchqueren.

8. Phasengitter nach einem der Ansprüche 2 bis 7, in welchem das Ausschlussgitter GE ein solches Ausschlussgebiet hat, dass dieses den einfallenden Flux diffundiert, der dieses durchquert.

9. Phasengitter nach einem der Ansprüche 2 bis 8, in welchem das Ausschlussgitter aufweist Ausschlussgebiete (ZE) mit stufenweise periodischen Variationen der Dicke "e", so dass der Dickenabstand e zwischen benachbarten Stufen einer Beziehung folgt: e=λ/(n-1) x (k+1/2),
in welcher:

    λ die mittlere Nutzwellenlänge ist,

        - "n" ist:

            ○ der Refraktionsindex des Materials im Falle einer Nutzung des Phasengitters zur Transmission, oder
            ○ eine Wertkonstante 3 im Falle einer Nutzung des Phasengitters zur Reflektion, und

        - k eine ganze Zahl ist.

10. Phasengitter nach einem der Ansprüche 2 bis 9, in welchem das Grundphasengitter (GPF) ein Schachbretttyp auf unterschiedlichen Ebenen ist, das einen Dickenabstand aufweist.

11. Phasengitter nach dem vorhergehenden Anspruch, in welchem das Grundphasengitter (GPF4) stufenweise, periodische Variationen der Dicke aufweist, wobei "e" zwischen benachbarten Stufen einer Beziehung folgt:

$$E=\lambda/ (n-1) \ x \ (k+1/2),$$

in welcher:

    - λ die mittlere Nutzwellenlänge ist,
    - "n" ist:

        ○ der Refraktionsindex des Materials im Falle einer Nutzung des Phasengitters zur Transmission, oder
        ○ eine Wertkonstante 3 im Falle einer Nutzung des Phasengitters zur Reflektion, und

    - k eine ganze Zahl ist.

12. Zweidimensionales Gitter einer Analyseeinrichtung nach einem der Ansprüche 2 bis 11, **dadurch gekennzeichnet, dass** dieses hergestellt ist aus einem Hauptbauteil durch Formgebung oder Pressung.

13. Analysevorrichtung für eine Lichtwellenfront bei optischer Kontrolle, zur Durchführung des Verfahrens nach Anspruch 1, **dadurch gekennzeichnet, dass** diese umfasst:

    α) einen optischen Eingang ($O_2$, $O_3$, $O_4$), der optisch eine Bezugsebene (PC) mit der Ebene (PD) verbindet, in welcher die Wellenfront analysiert wird,
    β) ein zweidimensionales Gitter nach einem der Ansprüche 2 bis 12, das in der Bezugsebene (PC) angeordnet ist und eine Diffraktion des Strahls in unterschiedliche Strahlenaustritte herbeiführt, und;
    γ) Beobachtungsmitteln des durch Interferenz der Strahlenaustritte gebildeten Bildes, einem Bild, dessen Deformationen verknüpft sind mit dem Gradienten der analysierten Wellenfront.

14. Analysevorrichtung nach Anspruch 13, in welchem das Phasengitter (GR), aufgraviert auf einer der Flächen eines Substrats, durch den Durchgang durch Ausschlussmaschen Lichtspitzen erzeugt, die dann durch Totalreflektion an der anderen Fläche des Substrats abgelenkt werden.

15. Analysevorrichtung nach Anspruch 14, in welcher das Phasengitter (GR) im Rahmen einer Transmission arbeitet.

16. Analysevorrichtung nach Anspruch 14, in welchem Gitter (GR) im Rahmen einer Reflektion arbeitet.

**FIG. 1A**

**FIG.1B**

## FIG.2

## FIG.3A

GE3A

## FIG.3B

GE3B

GE3C

M_D

e

aL

bl

l

**FIG.3C**

**FIG.4**

GPF4

M_{2D}

2l

e

2L

**FIG.5**

GE3C

GPF4

GPF4

GPF4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2682761
- FR 2712978
- FR 2795175
- FR 2896583
- FR 2897426

**Littérature non-brevet citée dans la description**

- Achromatic Three-Wave (or more) Lateral Shearing Interferometer. *Journal of Optical Society of America A,* Décembre 1995, vol. 12 (12